# NEW EUROPEAN PATENT SPECIFICATION

(11) **EP 0 273 488 B2**
(45) Date of publication and mention of the opposition decision: **13.03.1996**
(45) Mention of the grant of the patent: 04.03.1992
(21) Application number: 87202324.7
(22) Date of filing: 25.11.1987
(51) Int. Cl.: A01C 17/00

(54) **An implement for spreading material**
Streuer
Epandeur

(30) Priority: 28.11.1986 NL 8603042
(43) Date of publication of application: 06.07.1988
(73) Proprietor: C. van der Lely N.V., NL-3155 PD Maasland (NL)
(72) Inventor: Van der Lely, Cornelis, CH-Zug (CH)
(74) Representative: Mulder, Herman

(56) References cited:
- EP-A- 0 053 419
- BE-B- 777 586
- DE-A- 1 557 961
- DE-A- 1 657 004
- DE-A- 2 001 715
- FR-A- 1 332 723
- FR-A- 1 453 355
- FR-E- 30 870
- US-A- 2 484 325

## Description

The invention relates to an implement for spreading material, in particular one for spreading fertilizers, comprising a frame, a hopper having at least one discharge outlet, a dosing device and at least one spreader member which is movable about a rotary axis, which implement furthermore includes connecting members by means of which it can be coupled to a tractor or a suchlike vehicle.

An implement of this kind is known from the DE-A-2 001 715. This known implement provides connecting members to couple the implement to a tractor. A bushing having a ring member is mounted to the bottom of the hopper. The bushing and ring member support the dosing device and the spreading member.

It is an object of the invention to provide an advantageous implement of the above-defined type. According to the invention, this can be achieved in that the dosing device and the spreading member are coupled to each other so as to constitute a prefabricated section, which section is mounted to fastening members provided at the lower end of the hopper so as to suspend from the hopper. Hereby, an advantageous mounting of the dosing device and the spreader member can be obtained. In this situation, the dosing device and the spreader member can be arranged relative to each other in an advantageous manner and can thereafter be connected as an integral unit to the hopper. An advantageous embodiment is obtained when the fastening members are arranged at the bottom side of a discharge funnel of the hopper, which fastening members embrace a laterally extending connecting edge of the hopper. This will facilitate the mounting of the whole dosing device-and-spreader member assembly. Thus, the connection of the dosing device and the spreader member to the hopper can be brought about in a simple manner by means of bolts.

In a further embodiment of the implement according to the invention, an intermediate section of the dosing device is secured to the fastening members, to which intermediate section there is contiguous with some clearance a flow discharge member provided with discharge outlets, the said flow discharge member being enclosed by the intermediate section and the spreader member. This facilitates the relative positioning of the various components during assembly of the implement.

According to the invention, in a further implement of the above-defined type, which implement includes at least two spreader members which are movable about rotary axes, two dosing members are rigidly interconnected and are fitted to the bottom of a hopper near two discharge outlets to which the dosing devices are contiguous. Thus, the position of the dosing devices relative to each other can be obtained in an appropriate manner. In this situation, the positioning of the spreader members relative to the dosing devices can be improved easily due to the intercoupling of the two spreader members to a connection member which is bolted to coupling members attached to the coupling beam. According to the invention, in a further implement of the above-defined type, two spreader members are intercoupled by means of a connection member which is fastened to a coupling beam arranged between two dosing devices. This will advantageously influence the assembly of the machine and its manufacture. In accordance with an advantageous embodiment, a dosing device includes a doser plate which is contiguous to a flow discharge member associated with said dosing device, which doser plate is connected to adjusting means which are at least partly supported by a coupling beam to which two dosing devices are fitted. Thus, the adjusting means for the doser plate can be mounted in an advantageous manner, while the operation of the doser plates can be effected in a simple manner.

In a further construction of the implement according to the invention, the two spreader members are rotatable in opposite directions relative to each other, it being possible for the rotation to be chosen such that the forwardly directed sides of the two spreader members, taken in the direction of operative travel of the machine, move away from each other during operation. Hereby can be accomplished an advantageous distribution of the material over the strip of soil to be spread. In particular, hereby can be achieved in an easy manner that the two spreader members spread the material over substantially coinciding sections.

An advantageous assembly of the implement is obtained when, according to the invention, it is essentially built-up of a frame, a hopper and a discharge mechanism comprising the dosing device and a spreader member, it being possible for said three sections to be prefabricated independently of each other and, after their manufacture, to be coupled together to form the implement. As said, the three main component parts can be manufactured independently of each other. In addition, each of these component parts can be connected to other component part to produce the implement. This may be of further advantage to the transport of the implements from their manufacturing site to the users. Also the building-up of stocks of the various component parts can be effected in an advantageous manner.

For a better understanding of the present invention and to show how the same may be carried into effect, reference will now be made, by way of example, to the accompanying drawings of an advantageous embodiment of the implement according to the invention, in which:
Figure 1 is a side view of an implement according to the invention;
Figure 2 is a front view of the implement shown in Figure 1, taken in the direction of the arrow II in Figure 1;

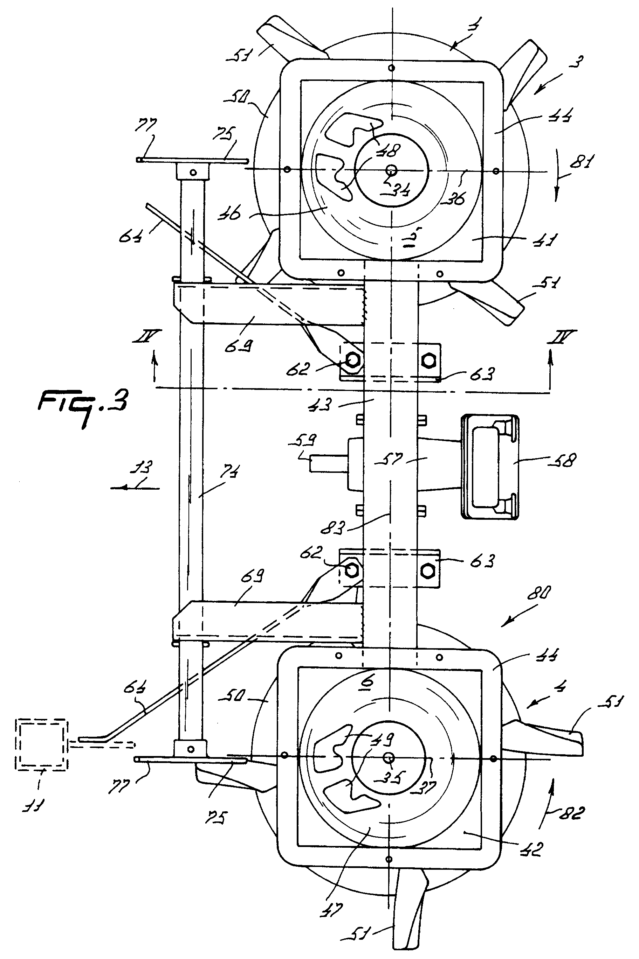

Figure 3 is, to an enlarged scale, a plan view of part of the implement taken on the line III-III in Figure 1, and
Figure 4 shows a detail of the implement as shown in Figures 1 to 3, taken on the line IV-IV in Figure 3.

The embodiment of an implement of the invention as shown in the drawings essentially consists of a frame 1, a hopper 2 to whose bottom there are applied two spreader members 3 and 4, and dosing devices 5 and 6 arranged between the respective spreader members 3 and 4 and said hopper 2.

The frame 1 is manufactured as an integral unit which, in the horizontal position of the implement, comprises two vertical supporting pillars 10 and 11. The supporting pillars 10 and 11 are interconnected at their upper ends by a horizontal connecting beam 12 extending equally far on both sides therebeyond. Taken in the direction of operative travel 13 of the implement, a carrier beam 14 is located behind the supporting pillars 10 and 11 and parallel to the connecting beam 12. The carrier beam 14 is of a shorter length than the connecting beam 12 and, seen in front view, extends beyond either side of the supporting pillars 10 and 11 only over a short distance. The carrier beam 14 is connected to each of the supporting pillars 10 and 11 by means of struts 15 and 16. The beam 14 is located at a distance 17 below the upper ends of the supporting pillars 10 and 11. The distance 17 is approximately equal to 1/3 of the height 18 of the supporting pillars 10 and 11. The lower ends of the supporting pillars 10 and 11 are intercoupled by means of a lower beam 19 which, seen in plan view, is V-shaped. The lower beam 19 includes sections which from the supporting pillars 10 and 11 converge and, seen in side view, come together behind the spreader members 3 and 4. At a short distance behind the supporting pillars 10 and 11, the sections of the lower beam 19 are intercoupled by means of a connecting beam 20 which extends parallel to the beams 12 and 14 and transversely to the direction of operative travel 13. The connecting beam 12 includes two lugs 21 which can be coupled to the top rod of the three-point lifting hitch of a tractor or a suchlike vehicle. The supporting pillar 10 includes connecting plates 22 which can be coupled to the lifting arm of a three-point lifting hitch of a tractor or a suchlike vehicle. The supporting pillar 11 has two connecting plates 23 which are coupled pivotally to the supporting pillar 11 by means of a pivot pin 24. The connecting plates 23 can be coupled to a second lifting arm of the three-point lifting hitch of a tractor. The connecting plates 23 are connected to an adjusting mechanism 25 consisting of a hydraulic cylinder the arrangement being such that the connecting plates 23 can optionally be brought in one of at least two different positions relative to the supporting pillar 11 in order to set the position of the implement relative to a tractor or a suchlike vehicle to which the implement can be coupled by means of the lugs 21 and the connecting plates 22 and 23. The lugs 21 and the connecting plates 22 and 23 constitute fastening members for fastening the implement to a tractor or a suchlike vehicle. The connecting beam 12 has three supporting plates 26, two of which are provided near the ends and one in the centre thereof. Near its ends, the carrier beam 14 is provided with two supporting plates 27. The hopper 2 is bolted to the supporting plates 26 and 27 by means of bolts 28.

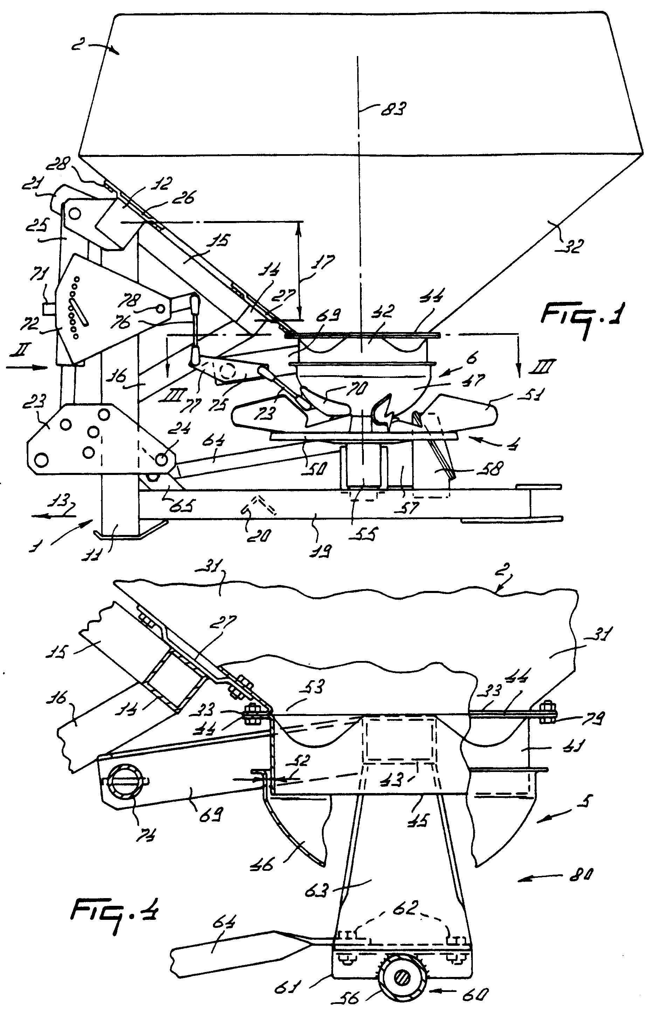

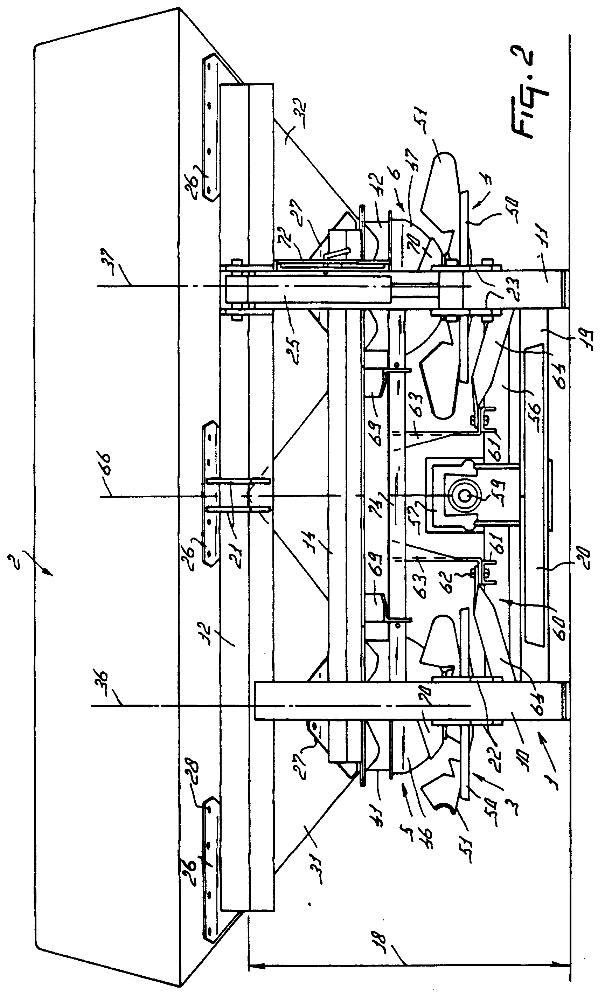

Seen in plan view, the hopper 2 is rectangular and has two discharge funnels 31 and 32 which also have a rectangular horizontal cross-section. The discharge funnels 31 and 32 are each provided at their lower ends with an outwardly flanged connecting edge 33, which is shown in detail in Figure 4 for discharge funnel 31. The connecting edges 33 of the discharge funnels 31 and 32 are identical to each other. In this embodiment, the centre lines 34 and 35 of the discharge funnels 31 and 32 extend vertically when the implement is in the horizontal position, as is shown in Figures 1 and 2. In this embodiment, the lower ends of the discharge funnels 31 and 32 cum connecting edges 33 are rectangular, said rectangles forming squares. The centre lines 34 and 35 are located in the centre of the squares formed by the connecting edges 33. The centre lines 34 and 35 are located in planes 36 and 37 extending parallel to the direction of operative travel 13. Said planes 36 and 37 comprise the centre lines of the supporting pillars 10 and 11.

The dosing devices 5 and 6 include intermediate sections 41 and 42, respectively, which are intercoupled by means of a coupling beam 43. As is apparent from Figure 4, in this embodiment, the coupling beam 43 is constituted by a hollow box section of a rectangular cross-section. The intermediate sections 41 and 42 are provided at their upper sides with outwardly flanged connecting edges 44, which are identical to each other. Seen in plan view, the connecting edges 44 are rectangular and, in this embodiment, square. In this situation, the centre lines 34 and 35 substantially constitute the centre lines of said connecting edges 44. From the rectangular connecting edges 44 onwards, the intermediate sections 41 and 42, which constitute connecting box sections, are shaped such that their lower ends 45 are round. The intermediate sections 41 and 42 are open towards their bottom ends. The open upper sides of the intermediate sections 41 and 42 are contiguous to the discharge outlets 53 of the hopper. The discharge outlets 53 are formed at the lower ends of the funnels 31 and 32. Said discharge outlets are enclosed by the connecting edges 33. Below the intermediate sections 41 and 42 there are arranged flow discharge members 46 and 47. The flow discharge members are bowl-shaped and each have two discharge outlets 48 and 49, respectively. By means of their upper ends, the flow discharge members 46 and 47 are arranged with some play 52 around the bottom ends 45 of the intermediate sections 41 and 42, the arrangement being such as is shown in particular in Figure 4. The flow discharge members 46 and 47 bear on the respective centre portions of the spreader members 3 and 4, each of which spreader members consists of a disc-shaped portion 50 having provided thereon spreader blades 51. The centre lines of the flow discharge members 46 and 47 coincide with those of the spreader members 3 and 4. In a manner not shown in further detail, the flow discharge members 46 and 47 are preferably centred by means of centring means relative to the centre lines of the spreader members 3 and 4 in such a manner that said spreader member centre lines coincide with those of the flow discharge members 46 and 47. In this embodiment, the centre lines of the spreader members 3 and 4, and hence those of the flow discharge members 46 and 47, coincide at least substantially with the centre lines 34 and 35 of the discharge funnels 31 and 32 of the hopper 2.

As is shown in Figure 1 for the spreader member 4, the spreader members 3 and 4 are bearing-supported in gear boxes 55. At the side facing the other gear box, each of the gear boxes 55 is coupled to a tubular beam 56. The tubular beams 56 are coupled to each other by a gear box 57. The gear box 57 has its centre located in the centre plane 66 of the implement. The gear box 57 has a coupling shaft 59 projecting forwardly therefrom. The gear box 57 includes a change gear box 58. By means of gear wheels (not shown in further detail) arranged in the gear box 57, the coupling shaft 59 is coupled to intermediate shafts (not shown either) extending inside said tubular beams 56. Via the gear wheels in the gear boxes 55, said intermediate shafts are coupled to shafts of the spreader members 3 and 4. The tubular beams 56 and the gear box 57 constitute a connecting member 60 for the two spreader members 3 and 4. The tubular beams 56 are fitted with fastening supports 61. Via the supports 61, the connecting member 60 is coupled by means of bolts 62 to coupling members 63 which are rigidly attached to the coupling beam 43. The combination of the connecting member 60 cum coupling members 63 and the coupling beam 43 is coupled to the frame 1 by means of supporting arms 64 which are bolted to said frame. The supporting arms 64 are connected to strut strips 65 which form part of the frame 1 and are provided between the lower beam 19 and the supporting pillars 10 and 11. Like the connecting member 60 and the coupling beam 43, the coupling members 63 and the supporting arms 64 are located symmetrically relative to the centre plane 66 of the implement. The centre plane 66 of the implement comprises the centre line of the coupling shaft 59 and the centre of the gear box 57 and the change gear box 58. The implement is formed substantially symmetrical relative to the centre plane 66.

Each of the flow discharge members 46 and 47 is fitted with a doser plate 70, by means of which the respective outlets 48 and 49 can optionally be closed to a greater or less extent. For this purpose, the two plates 70 are coupled to an adjusting member 71. The adjusting member 71 is optionally lockable in one of a plurality of positions relative to an indicator member 72 for an optional setting of the plate 70 with respect to the discharge outlets 48 and 49. The doser plates 70 are coupled by means of coupling rods 73 to adjusting arms 75 provided on an adjusting shaft 74. The adjusting shaft 74 is borne by carrier arms 69 mounted on the coupling beam 43. The coupling rods 73 are in the form of fine adjusters to set the plates 70 relative to the flow discharge members upon coupling thereof to the adjusting member 71. The adjusting shaft 74 is coupled by means of an adjusting arm 77 to a coupling rod 76 coupled to the adjusting member 71. The adjusting member 71 is pivotal about a pivot pin 78, which is connected to the frame 1 in a manner not shown in further detail.

The implement according to the invention, an embodiment of which was described in the foregoing with reference to the accompanying drawings, provides an implement for spreading material which is of a simple construction. The implement can advantageously be used as an agricultural implement for spreading e.g. fertilizer or seed materials. The construction according to the invention is such that the implement can be manufactured and mounted advantageously. The implement is assembled such that several of the component parts can be prefabricated as integral units, after which the implement can be assembled from the said several prefabricated component parts. According to the invention, the implement essentially consists of three prefabricated main sections which can be combined to form the implement. The frame 1 constitutes one main section to be prefabricated as a whole. The hopper 2 constitutes another such main section, while the third such main section is constituted by the spreader members 3 and 4 with the dosing devices 5 and 6. The spreader members 3 and 4 are coupled to the connecting member 60 so as to form an integral whole. The intermediate sections 41 and 42 constitute a unit in which they are coupled to each other by means of the coupling beam 43. The beam 43 and the connecting member 60 are intercoupled by means of the coupling members 63. The flow discharge members 46 and 47 can be arranged between the intermediate sections 41 and 42 and the respective spreader members 3 and 4 upon connection of the coupling beam 43 to the connecting member 60. The dosing devices 5 and 6 with the spreader members 3 and 4 constitute a prefabricated unit, it being in particular possible for the flow discharge members 46 and 47 to be appropriately positioned contiguous to the spreader members 3 and 4 during the pre-assembling operation. The relative distance between the spreader members 3 and 4 can also be obtained easily by the coupling of the spreader members to each other via the connecting member 60. The flow discharge members 46 and 47 are positioned with some clearance 52 relative to the lower ends 45 of the intermediate sections 41 and 42. This facilitates the mounting of the flow discharge members 46 and 47 relative to the intermediate sections 41 and 42 during assembly of the whole constituting a discharge mechanism 80 and comprising dosing devices 5 and 6 and the spreader members 3 and 4.

During assembly of the implement, the hopper 2 can be secured to the frame 1 by bolting same by means of the bolts 28 to the supporting plates 26 and 27 of the frame 1. Thereafter, the discharge mechanism 80 comprising the spreader members 3 and 4 and the dosing devices 5 and 6 can be fitted to the bottom side of the hopper 2 in such manner that it suspends therefrom. For this purpose, the connecting edges 44 are coupled by means of bolts 79 to the connecting edges 33. By giving either the bolt holes in the edges 33 or in the edges 44 more or less clearance, the application of the connecting edges 44 against the connecting edges 33 can be simplified. The fitting of the connecting bolts 79 in the respective holes of the edges 33 and 44 can then be effected easily without the wide holes being disadvantageous to the construction of the implement or its operation. Thus, without the necessity of too close a fit between the connecting edges 33 and the connecting edges 44, it is possible to achieve an appropriate and fast mounting of the discharge mechanism 80 to the hopper 2.

The construction according to the invention as shown is particularly suitable for use in an implement comprising two spreader members, each of which is in connection with the hopper via a dosing device. The construction according to the invention achieves that in a simple and fast manner an appropriate positioning of the dosing devices and the spreader members relative to each other is ensured without this being dependent on the further construction of the machine. The manufacture of the implement according to the invention can furthermore be achieved to advantage due to the fact that the frame 1, the hopper 2 and the discharge mechanism 80 can be produced independently of each other. Each of the said three main sections can be combined with any of the other prefabricated main sections to provide an implement according to the invention. During the prefabrication, the discharge mechanism 80 can be fitted with the doser members 70 which are contiguous to the flow discharge members. In this situation, the doser members 70 can be coupled to the shaft 74 via the coupling rods 73 and the adjusting arms 75. The shaft 74 can be connected advantageously to the two carrier arms 69 which are rigidly secured to the coupling beam 43. The adjusting member 71 can be coupled to the frame 1 by securing thereof to the pivot pin 78. The adjusting member 71 can furthermore be coupled in a simple way via the coupling rod 76 to the adjusting arm 77 fitted to the shaft 74. The adjusting arms 77 and 75 preserve their fixed postion because they are rigidly coupled to the shaft 74. Therefore, during the prefabrication, the discharge mechanism 80 can be provided with the doser plate 70 and the shaft 74 with the coupling arms 73.

The construction is particularly advantageous for use in implements wherein the two spreader members 3 and 4 are of such a construction and are fed with material in such a manner that, during operation, each thereof spreads the said material over the same sector. To that end, the discharge outlets 48 and 49 are located preferably in front of the transverse plane 83 including the rotary axes of the spreader members 3 and 4. Said rotary axes coincide with the centre lines 34 and 35 and are, therefore, indicated by the same reference numerals. During operation, each of the spreader members will spread the material to an equal extent on both sides of the centre plane 66. With implements of this type it is of advantage that the spreader members 3 and 4 are arranged appropriately relative to each other, while it is furthermore of importance that the discharge outlets 48 and 49 are positioned appropriately, preferably mirror-symmetrically, relative to the centre plane 66. This can be achieved in particular by designing the discharge mechanism 80 as an integral unit. Although the invention is particularly suitable for use in spreaders having two spreader members, the construction assembled from the three main sections 1, 2 and 80 is in itself also suitable for use in implements for spreading material having only one spreader member or more than two spreader members. During assembly, the positioning of the discharge mechanism 80 relative to the frame 1 can be supported advantageously to a further extent by means of the supporting arms 64.

Although in the embodiment shown the discharge mechanism 80 is in principle mounted in such a manner that it suspends from the bottom side of the hopper 2, it is alternatively possible for the discharge mechanism 80 to be fitted in a different manner to a frame of a different construction. For example, it is possible for the frame 1 to be provided with rearwardly extending supporting arms, to which the coupling beam 43 can be connected. Such supporting arms may then be further coupled to the lower beam 19. Then, the supporting arms constitute together with the lower beam 19 a rigid support for the beam 43, via which at least part of the weight of the hopper 2 can indeed be transferred to said frame portions.

During use of the implement, it is coupled to the lifting hitch of a tractor or a suchlike vehicle, the lugs 21 being coupled to the top arm and the connecting plates 22 and 23 to the lifting arms of the lifting hitch of a tractor or a suchlike vehicle. The power take-off shaft of the tractor is then coupled to the coupling shaft of the gear box 57 via an intermediate shaft. During operation, the spreader members 3 and 4 can then be driven in the desired direction of rotation from the power take-off shaft via the coupling shaft 59 and the transmission members provided between said shaft and the spreader members. In this embodiment, during operation, the spreader members are driven in opposite directions as indicated by the arrows 81 and 82. The sides of the spreader members 3 and 4 that extend forwardly relative to the direction of operative travel 13 will then move away from each other. During operation, each of the spreader members 3 and 4 will spread the material sideways in the opposite direction from substantially their front sides and, during rotation, further to the rear and sidewards along the rear side of the other spreader member. Then, each of the spreader members will spread the material substantially over the entire width of the strewn strip of soil during movement in the direction of operative travel 13. However, the construction of the embodiment shown can also be employed in implements having two spreader members which rotate, for example, opposite to the two directions of rotation 81 and 82. Then, the position of the outlets 48 and 49 will usually be shifted such that said outlets are located, for example, to a larger extent in the facing sides of the flow discharge members 46 and 47. The flow discharge outlets 48 and 49 will then be located at the facing sides of the planes 36 and 37 including the rotary axes 34 and 35 of the spreader members and dosing devices. In this situation, the centre lines 34 and 35 constitute upwardly extending rotary axes of the rotatable spreader members, which rotary axes are located vertically during a horizontal arrangement of the implement.

The speed of rotation of the spreader members 3 and 4 can be set advantageously by means of gear wheels which are accommodated in the change gear box 58 and which are interchangeable or exchangeable for other change wheels, which is not shown in further detail. By changing the speed of rotation of the spreader members, the spread of the material can optionally be adapted to advantage ,for example, the material can be spread over a more or less large width of a strip strewn during movement of the implement in the direction of operative travel indicated by the arrow 13. The material to be spread during operation is carried along in the hopper 2. From said hopper 2, the material will be able to flow through the outlet aperture 53 provided at the bottom side of the discharge funnels 31 and 32 and via the intermediate sections 41 and 42 to the flow discharge members 46 and 47. From said flow discharge members 46 and 47, the material can be fed through the outlets 48 and 49 to the spreader members 3 and 4, respectively. The quantity of material flowing per unit of time through the discharge outlets 48 and 49 can be determined by closing said outlets to a greater of lesser extent by means of the doser plates 70. Said doser plates 70 can be adjusted and be locked in the desired position relative to the flow discharge members by means of the adjusting member 71.

## Claims

1. An implement for spreading material, in particular one for spreading fertilizers, comprising a frame (1), a hopper (2) having at least one discharge outlet (53), a dosing device (5, 6) and at least one spreader member (3, 4) which is movable about a rotary axis (36, 37), which implement furthermore includes connecting members (21, 22, 23) by means of which it can be coupled to a tractor or a suchlike vehicle, characterized in that the dosing device (5, 6) and the spreading member (3, 4) are coupled to each other so as to constitute a prefabricated section (80), which section is mounted to fastening members (33) provided at the lower end of the hopper so as to suspend from the hopper.

2. An implement as claimed in claim 1, characterized in that the fastening members (33) are arranged at the bottom side of a discharge funnel (31, 32) of the hopper (2), which fastening members embrace a laterally extending connecting edge (33) of the hopper (2).

3. An implement as claimed in claim 1 or 2, characterized in that an intermediate section (41, 42) of the dosing device (5, 6) is secured to the fastening members (33), to which intermediate section there is contiguous with some clearance a flow discharge member (46, 47) provided with discharge outlets (48, 49), the said flow discharge member being enclosed by the intermediate section (41, 42) and the spreader member (3, 4).

4. An implement as claimed in any one of the preceding claims, characterized in that a flow discharge member (41, 42) forming part of the dosing device (5, 6) bears with at least part its weight on a spreader member (3, 4) and is centred relative to the rotary axis (36, 37) of said spreader member (3, 4).

5. An implement as claimed in any one of the preceding claims, characterized in that the implement includes two spreader members (3 and 4), each of which is contiguous to a dosing device (5 and 6, respectively), the two dosing devices being coupled to each other by means of a coupling beam (43) which is connected to a connecting member (60) on which the two spreader members (3, 4) are provided.

6. An implement as claimed in any one of the preceding claims, characterized in that a dosing device (5, 6) includes a doser plate (70) which is contiguous to a flow discharge member (46, 47) associated with said dosing device, which doser plate is connected to adjusting means (71 - 78) which are at least partly supported by a coupling beam (43) to which two dosing devices (5, 6) are fitted.

7. An implement as claimed in any one of the preceding claims, characterized in that two spreader members (3, 4) are drivingly intercoupled via drive means (55 - 59) arranged in a connecting member (60) to which the two spreader members (3, 4) are coupled, which drive means include a coupling shaft (59) which can be coupled by means of an intermediate shaft to the power take-off shaft of a tractor or a suchlike vehicle.

8. An implement as claimed in claim 7, characterized in that the two spreader members (3, 4) are rotatable in opposite directions (81, 82) relative to each other, so that their forwardly directed sides, taken in the direction of operative travel (13) of the implement, move away from each other during operation.

9. An implement as claimed in claim 8, characterized in that the flow discharge outlets (48, 49) of the flow discharge members (46, 47) contiguous to the two spreader members (3, 4) are located, relative to the direction of operative travel (13) of the implement, in front of a plane (83) including the two upwardly extending rotary axes (36, 37) of the spreader members (3, 4).

10. An implement as claimed in any one of the preceding claims, characterized in that the implement is essentially assembled from a frame (1), a hopper (2) and a discharge mechanism (80) comprising the dosing device (5, 6) and a spreader member (3, 4), which three sections (1, 2 and 80) can be prefabricated independently of each other and, after their prefabrication, can be coupled together to form the implement.

11. An implement as claimed in any one of claims 6 to 10, characterized in that the doser plate (70) is coupled to a fine-adjusting means in such a manner that the doser plate (70) is adjustable relative to the discharge outlets (48, 49) in the flow discharge member (46, 47), said means for the fine adjustment being coupled to a coupling beam which interconnects at least parts of the dosing device (5, 6).

## Patentansprüche

1. Gerät zum Ausstreuen von Material, insbesondere von Dünger, mit einem Rahmen (1), einem mindestens eine Auslaßöffnung (53) aufweisenden Behälter (2), einer Dosiervorrichtung (5, 6) und mindestens einem Streuglied (3, 4), das um eine Rotationsachse (36, 37) drehbar ist, sowie mit Verbindungsgliedern (21, 22, 23) zum Anschließen an einen Schlepper oder ein ähnliches Fahrzeug,
dadurch gekennzeichnet, daß die Dosiervorrichtung (5, 6) und das Streuglied (3, 4) zu einer vorgefertigten Einheit (80) verbunden sind, die an am unteren Ende des Behälters vorgesehenen Befestigungsgliedern (33) und dadurch an dem Behälter hängend befestigt ist.

2. Gerät nach Anspruch 1,
dadurch gekennzeichnet, daß die Befestigungsglieder (33) an der Bodenseite eines Auslaßtrichters (31, 32) des Behälters (2) angeordnet sind und einen seitwärts gerichteten Rand (33) des Behälters (2) umfassen.

3. Gerät nach Anspruch 1 oder 2,
dadurch gekennzeichnet, daß ein Mittelstück (41, 42) der Dosiervorrichtung (5, 6) an den Befestigungsgliedern (33) fest angebracht ist, und daß an das Mittelstück mit Spiel ein Auslaßteil (46, 47) anschließt, das Auslaßöffnungen (48, 49) aufweist, und das von dem Mittelstück (41, 42) und dem Streuglied (3, 4) eingeschlossen ist.

4. Gerät nach einem der vorhergehenden Ansprüche,
dadurch gekennzeichnet, daß ein Auslaßteil (41, 42) Bestandteil der Dosiervorrichtung (5, 6) ist und mit mindestens einem Teil seines Gewichtes auf einem Streuglied (3, 4) aufgelagert sowie zur Rotationsachse (36, 37) des Streugliedes (3, 4) zentriert ist.

5. Gerät nach einem der vorhergehenden Ansprüche,
dadurch gekennzeichnet, daß das Gerät zwei Streuglieder (3 und 4) aufweist, von denen jedes an eine Dosiervorrichtung (5 bzw. 6) anschließt, und daß die beiden Dosiervorrichtungen miteinander durch einen Verbindungsbalken (43) verbunden sind, der an einem Verbindungsglied (60) angebracht ist, auf dem die beiden Streuglieder (3, 4) angeordnet sind.

6. Gerät nach einem der vorhergehenden Ansprüche,
dadurch gekennzeichnet, daß eine Dosiervorrichtung (5, 6) eine Dosierplatte (70) aufweist, die an ein der Dosiervorrichtung zugeordnetes Auslaßteil (46, 47) anschließt, und daß die Dosierplatte mit einer Stellvorrichtung (71-78) verbunden ist, die mindestens teilweise von einem Verbindungsbalken (43) getragen ist, an dem zwei Dosiervorrichtungen (5, 6) angebracht sind.

7. Gerät nach einem der vorhergehenden Ansprüche,
dadurch gekennzeichnet, daß zwei Streuglieder (3, 4) mittels einer Antriebseinrichtung (55-59) antriebsverbunden sind, die in einem Verbindungsglied (60) angeordnet ist, mit dem die beiden Streuglieder (3, 4) verbunden sind, und daß die Antriebseinrichtung eine Kupplungswelle (59) aufweist, die mittels einer Zwischenwelle mit der Zapfwelle eines Schleppers oder eines ähnlichen Fahrzeugs zu kuppeln ist.

8. Gerät nach Anspruch 7,
dadurch gekennzeichnet, daß die beiden Streuglieder (3, 4) in entgegengesetzte Richtungen (81, 82) drehbar sind, derart, daß sich ihre in bezug auf die Arbeitsrichtung (13) des Gerätes vorderen Seiten im Betrieb divergierend bewegen.

9. Gerät nach Anspruch 8,
dadurch gekennzeichnet, daß die Auslaßöffnungen (48, 49) der an die beiden Streuglieder (3, 4) anschließenden Auslaßteile (46, 47) in bezug auf die Arbeitsrichtung (13) des Gerätes vor einer Ebene (83) angeordnet sind, welche die beiden aufwärts gerichteten Rotationsachsen (36, 37) der Streuglieder (3, 4) enthält.

10. Gerät nach einem der vorhergehenden Ansprüche,
dadurch gekennzeichnet, daß das Gerät hauptsächlich aus einem Rahmen (1), einem Behälter (2) und einer die Dosiervorrichtung (5, 6) und ein Streuglied (3, 4) aufweisenden Austragmechanik (80) zusammengebaut ist, wobei die drei Einheiten (1, 2 und 80) unabhängig voneinander vorzufertigen und danach zur Fertigstellung des Gerätes miteinander zu verbinden sind.

11. Gerät nach einem der Ansprüche 6 bis 10,
dadurch gekennzeichnet, daß die Dosierplatte (70) mit einer Feinjustiervorrichtung derart verbunden ist, daß sie relativ zu den Auslaßöffnungen (48, 49) des Auslaßteiles (46, 47) justierbar ist, wobei die Feinjustiervorrichtung mit einem Verbindungsbalken verbunden ist, der mindestens Teile der Dosiervorrichtung (5, 6) verbindet.

## Revendications

1. Machine pour épandre de la matière, en particulier pour épandre des engrais, comprenant un châssis (1), une trémie (2) ayant au moins un orifice de décharge (53), un dispositif doseur (5, 6) et au moins un organe épandeur (3,4) qui est mobile autour d'un axe de rotation (36, 37), laquelle machine comporte en outre des organes de liaison (21, 22, 23) au moyen desquels elle peut être couplée à un tracteur ou à un véhicule similaire,
**caractérisée** en ce que le dispositif doseur (5, 6) et l'organe épandeur (3, 4) sont couplés l'un à l'autre de manière à constituer une section préfabriquée (80), laquelle section est attachée à des organes de fixation (33) prévus à l'extrémité inférieure de la trémie de manière à être suspendue à partir de la trémie.

2. Machine selon la revendication 1, caractérisée en ce que les organes de fixation (33) sont disposés au côté inférieur d'un entonnoir de décharge (31, 32) de la trémie, lesquels organes de fixation enserrent un bord de jonction (33) de la trémie (2) s'étendant latéralement.

3. Machine selon la revendication 1 ou 2, caractérisée en ce qu'une section intermédiaire (41, 42) du dispositif doseur (5, 6) est fixée aux organes de fixation (33), à laquelle section intermédiaire se trouve contigu, avec un certain jeu, un organe d'écoulement (46, 47) munid'orifices de décharge (48, 49), ledit organe d'écoulement étant entouré par la section intermédiaire (41, 42) et par l'organe épandeur (3, 4).

4. Machine selon l'une quelconque des revendications précédentes, caractérisée en ce qu'un organe d'écoulement (41, 42) faisant partie du dispositif doseur (5, 6) porte, avec au moins une partie de son poids, sur un organe épandeur (3, 4) et est centré par rapport à l'axe de rotation (36, 37) dudit organe épandeur (3, 4).

5. Machine selon l'une quelconque des revendications précédentes, caractérisée en ce que la machine comporte deux organes épandeurs (3, 4) dont chacun est contigu à un dispositif doseur (5 et 6, respectivement), les deux dispositifs doseurs étant couplés l'un à l'autre au moyen d'une poutre de liaison (43) qui est reliée à un organe de liaison (60) sur lequel sont prévus les deux organes épandeurs (3, 4).

6. Machine selon l'une quelconque des revendications précédentes, caractérisée en ce qu'un dispositif doseur (5,6) comporte une plaque doseuse (70) qui est contigüe à un organe de déversement (46, 47) associé audit dispositif doseur, laquelle plaque doseuse est reliée à des moyens de réglage (71-78) qui sont au moins partiellement soutenus par une poutre de liaison (43) sur laquelle sont montés deux dispositifs doseurs (5, 6).

7. Machine selon l'une quelconque des revendications précédentes, caractérisée en ce que deux organes épandeurs (3, 4) sont entraînés solidairement par des moyens d'entraînement (55 - 59) disposés dans un organe de liaison (60) auquel sont couplés les deux organes épandeurs (3, 4), ces moyens d'entraînement comportant un arbre d'accouplement (59) qui peut être accouplé au moyen d'un arbre intermédiaire à l'arbre de prise de force d'un tracteur ou d'un véhicule similaire.

8. Machine selon la revendication 7, caractérisée ence que les deux organes épandeurs (3, 4) sont rotatifs dans des sens opposés (81, 82) l'un à l'autre, de telle sorte que leurs côtés dirigés vers l'avant, vus dans le sens de marche (13) du travail de la machine, s'éloignent l'un de l'autre au cours du travail.

9. Machine selon la revendication 8, caractérisée en ce que les orifices de décharge (48, 49) des organes de déversement (46, 47) contigus aux deux organes épandeurs (3, 4) sont situés, par rapport au sens de marche (13) du travail de la machine, en avant d'un plan (83) contenant les deux axes de rotation (36, 37), s'étendant vers le haut, des organes épandeurs (3, 4).

10. Machine selon l'une quelconque des revendications précédentes, caractérisée en ce que la machine est essentiellement assemblée à partir d'un châssis (1), d'une trémie (2) et d'un mécanisme de déversement (80) comprenant le dispositif doseur (5, 6) et un organe épandeur (3, 4), lesquelles trois sections (1, 2 et 80) peuvent être préfabriquées indépendamment l'une des autres et, après leur préfabrication, être couplées ensemble pour former la machine.

11. Machine selon l'une quelconque des revendications 6 à 10, caractérisée en ce que la plaque doseuse (70) est couplée à un mécanisme de réglage fin, de telle manière que la plaque doseuse (70) est réglable par rapport aux orifices de décharge (48, 49) dans l'organe de déversement (46, 47), lesdits moyens de réglage fin étant couplés à une poutre d'accouplement qui relie entre elles au moins des parties du dispositif doseur (5, 6).
